# EUROPÄISCHE PATENTSCHRIFT

(11) **EP 1 423 036 B1**
(45) Veröffentlichungstag und Bekanntmachung des Hinweises auf die Patenterteilung: **20.06.2007**
(21) Anmeldenummer: 02764860.9
(22) Anmeldetag: 23.08.2002
(51) Int. Cl.: A47J 19/02

(54) **FRUCHTPRESSE**
FRUIT JUICER
PRESSE-FRUITS

(30) Priorität: 30.08.2001 DE 10142502
(43) Veröffentlichungstag der Anmeldung: 02.06.2004
(73) Patentinhaber: BSH Bosch und Siemens Hausgeräte GmbH, 81739 München (DE)
(72) Erfinder: STEFFL, Michael, 83250 Marquartstein (DE); KRAMER, Siegmund, 83417 Kirchanschöring (DE); ZIBRET, Igor, 3327 Smartno ob Paki (SI); PAVLOVIC, Henrik, Ljubno ob Savin 3333 (SI); BREZOVNIK, Peter, 3330 Mozirje (SI); MAZEJ, Stanislav, 3303 Gomilsko (SI); AREH, Marko, 2360 Radlje ob Dravi (SI)
(86) Internationale Anmeldenummer: PCT/EP2002/009468
(87) Internationale Veröffentlichungsnummer: WO 2003/022113

(56) Entgegenhaltungen:
- DE-U- 8 811 118
- ES-A- 2 014 690
- GB-A- 685 987
- US-A- 6 070 519

## Beschreibung

Die Erfindung betrifft eine über einen Elektromotor angetriebene Fruchtpresse, gemäß dem Oberbegriff von Anspruch 1, mit einem mittig angeordneten, herausragenden und sich nach oben verjüngenden Element zum Auspressen einer Frucht, das bei Betätigung eines ersten Schaltmittels über den Elektromotor mit einer ersten Drehgeschwindigkeit und bei Betätigung eines zweiten Schalt mittels mit einer zweiten Drehgeschwindigkeit antreibbar ist.

Gattungsgemäße Fruchtpressen sind z.B. aus der US 6 070 519 A bekannt.

Auch aus der EP 0 362 958 B1 ist eine durch einen Elektromotor angetriebene Fruchtpresse bekannt. Dort treibt der Motor über einen Zahnriemen und über Riemenscheiben eine Welle an, auf deren oberem Ende die Fruchtpresse zusammen mit einem mittig aus ihr herausragenden und sich nach oben verjüngenden Element angeordnet ist. Die bekannte Fruchtpresse lässt sich bei Drehgeschwindigkeiten zwischen 2000 und 2500 Umdrehungen pro Minute betreiben.

Im übrigen sei noch auf die DE 88 11 118 U hingewiesen.

Das Einschalten einer motorischen Fruchtpresse wird bei bekannten Fruchtpressen entweder dadurch realisiert, dass der Bediener einen Schalter betätigt, so dass sich der Elektromotor in Drehung versetzt, oder dadurch, dass über einen mit der Fruchtpresse verbundenen Hebelmechanismus und über Zahnräder die Fruchtpresse eingeschaltet wird, wenn durch den Bediener Druck auf das Element ausgeübt wird.

Es ist die Aufgabe der Erfindung, die Bedienung einer Fruchtpresse noch komfortabler zu gestalten.

Erfindungsgemäß wird diese Aufgabe bei einer Fruchtpresse der eingangs genannten Art dadurch gelöst, dass das zweite Schaltmittel durch eine Taste schaltbar ist, bei dessen Betätigung das Element mit der zweiten, einer gegenüber der ersten Drehgeschwindigkeit höheren Drehgeschwindigkeit angetrieben ist.

Mit Hilfe dieser Funktion wird der aus der Frucht ausgepresste Fruchtsaft mit noch höherer Geschwindigkeit an die Mantelwand des Auffangbehältnisses zentrifugiert und auch das Fruchtfleisch wird gegen die Mantelwand geschleudert, was dazu führt, dass auch noch Saft aus dem Fruchtfleisch ausgequetscht wird, so dass sich eine noch größere Ausbeute an Fruchtsaft mit der erfindungsgemäßen Fruchtpresse erzielen lässt.

Durch einen Druck auf das Element, der von dem Bediener automatisch ausgeübt wird, wenn er eine Zitrusfrucht auspressen möchte, wird gleichzeitig ein elektrischer Kontakt hergestellt und der Motor eingeschaltet. Durch die zusätzliche Betätigung des weiteren Schaltmittels wird die Drehgeschwindigkeit noch einmal erhöht, beispielsweise auf 4000 Umdrehungen pro Minute.

Vorteilhafte Weiterbildungen der Erfindung ergeben sich aus den Unteransprüchen und der Beschreibung.

Als vorteilhaft erweist es sich, wenn das zweite Schaltmittel nur dann betätigbar ist, wenn das erste Schaltmittel eingeschaltet ist.

Besonders gut zugänglich ist die Taste, wenn sie auf einer Mantelwand oder Gehäuseaußenwand der Fruchtpresse angeordnet ist.

Nachstehend wird die Erfindung in einem Ausführungsbeispiel anhand der Figuren näher erläutert. Es zeigen:
- Fig. 1:: eine Fruchtpresse im Längsschnitt,
- Fig. 2:: einen Schalter gemäß Fig. 1, vergrößert, im Längsschnitt,
- Fig. 3: einen Schaltkreis der Fruchtpresse und
- Fig. 4: das Gehäuse der Fruchtpresse in einer seitlichen perspektivischen Ansicht.

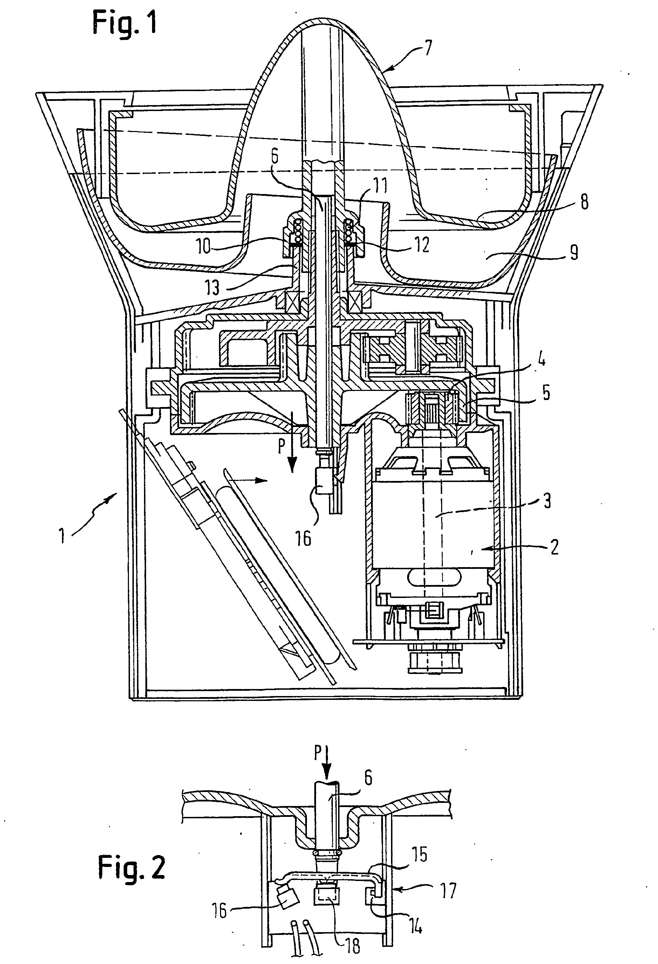

Eine Fruchtpresse 1 (Fig. 1) weist einen Elektromotor 2 als Antriebsmotor auf. Dieser treibt auf eine Antriebswelle 3. Auf der Antriebswelle 3 ist endseitig ein Zahnrad 4 angeordnet, das mit einem Zahnrad 5 kämmt.

Das Zahnrad 5 ist auf einer Antriebswelle 6 befestigt. An ihrem oberen Ende trägt die Antriebswelle 6 ein Element 7, das im wesentlichen als Rotationsparaboloid, als Kegel, Kegelstumpf oder als Halbkugel ausgebildet ist. Das Element 7 trägt Grate und dazwischenliegende Vertiefungen, die zum Auspressen einer Frucht dienen. Der ausgepresste Saft läuft in ein ringförmig um das Element 7 und zusammen mit diesem über die Antriebswelle drehbaren Auffangbehältnis 8. Dieses weist Schlitze auf, aus denen der Saft in eine unbeweglich angeordnete Auffangschale 9 rinnt.

Auf seiner Unterseite ist das Element 7 mit einer Nabe 10 verbunden. Diese ist fest mit der Antriebswelle 6 verbunden. Die Nabe 10 liegt über eine Druckfeder 11 und eine Gleitscheibe 12 auf einer Wellenbuchse 13 auf.

Wenn nun eine Frucht auf das Element 7 aufgelegt wird, um diese auszupressen, und eine Kraft auf das Element 7 ausgeübt wird, wird dieses zusammen mit der Nabe 10 und der Antriebswelle 6 gegen die rücktreibende Kraft der Druckfeder 11 heruntergedrückt, wobei sich die Antriebswelle 6 in Richtung eines Pfeils P bewegen lässt.

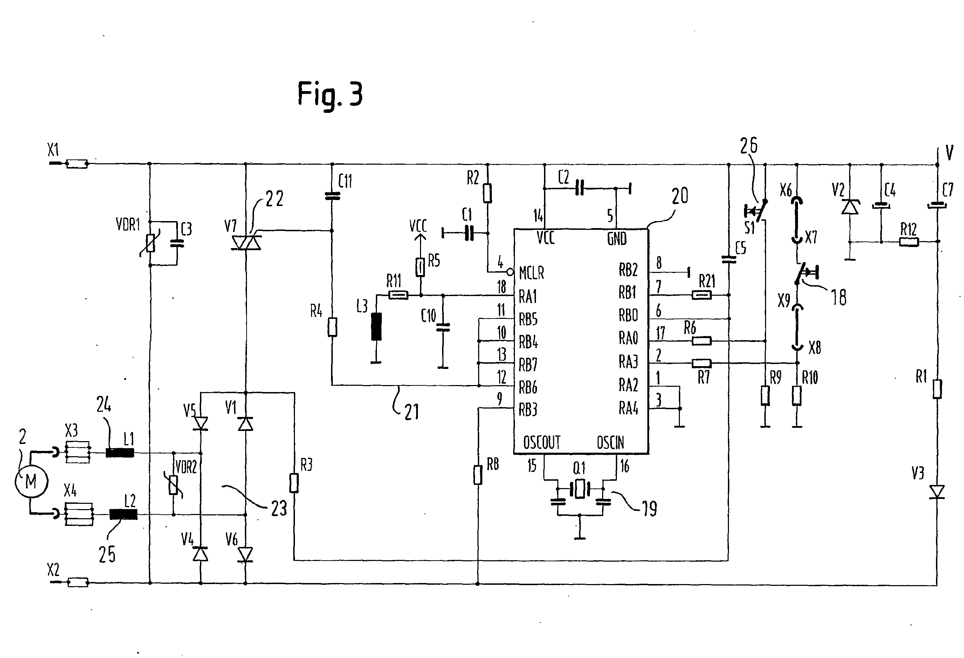

Aufgrund dieser axialen Bewegung betätigt die Antriebswelle 6 eine an einem Befestigungspunkt 14 (Fig. 2) befestigte und um ihr freies Ende schwenkbar angeordnete Schaltwippe 15, so dass diese gegen einen Taster 16 gedrückt wird. Der Taster 16 wird von einer Gehäusehalterung 17 aufgenommen. Durch das Schließen eines Schaltkontakts 18 (Fig. 3) mittels des Tasters 16 wird der Elektromotor 2 betätigt und treibt über die Antriebswellen 3 und 6, die Zahnräder 4 und 5 sowie die Nabe 10 das Element 7 zusammen mit dem Auffangbehältnis 8 an, um Saft aus der Frucht herauszupressen.

Der Elektromotor 2 und der Schaltkontakt 18 sind Teil eines elektrischen Schaltkreises, der mit einer Spannung V versorgt wird. Der Schaltkreis enthält einen durch eine Uhr 19 getakteten Mikrocontroller 20, der über eine Steuerleitung einen Triac 22 steuert, über den der Elektromotor 2 gesteuert wird. Dem Elektromotor ist eine Gleichrichterbrückenschaltung 23 vorgeschaltet. Spulen 24, 25 dienen zur Signalglättung.

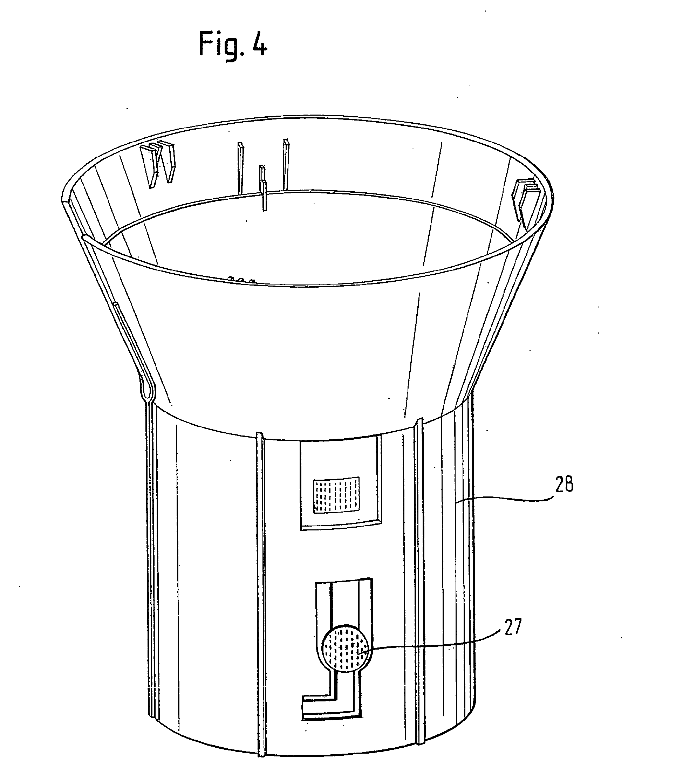

In dem Schaltkreis ist ein Schalter 26 enthalten, bei dessen Betätigung mittels einer Taste 27 (Fig. 4), die auf einer Gehäuseaußenwand 28 angeordnet ist, dem Elektromotor 2 aufgrund einer entsprechenden Ansteuerung mittels des Mikrocontrollers 20 ein höherer Strom zugeführt wird, so dass er sich mit höherer Drehzahl dreht.

Der Schaltkreis ist entweder so verschaltet, dass die Betätigung des Schalters 26 zusätzlich zu der Betätigung des Schalters 18 erforderlich ist, oder er ist so eingerichtet, dass alternativ der Schalter 18 oder der Schalter 26 betätigt wird.

Durch die Erfindung wird ein zusätzlicher Schalter 26 für eine Fruchtpresse vorgesehen, durch den sich die Drehzahl, mit der sich diese, d. h. das Element 7, das die auszupressende Frucht aufnimmt, dreht. Über eine Taste 27, die auf der Gehäuseaußenwand 28 angeordnet ist, wird der Mikrocontroller 20 derart angesteuert, dass dem Elektromotor 2 ein höherer Strom zugeführt wird und dieser sich mit einer höheren Drehzahl dreht. Dadurch lässt sich auch aus dem von der auszupressenden Frucht bereits abgetrennten Fruchtfleisch noch Fruchtsaft herauspressen.

## Patentansprüche

1. Fruchtpresse (1) mit einem mittig angeordneten, herausragenden und sich nach oben verjüngenden Element (7) zum Auspressen einer Frucht, das von einem Elektromotor (2) bei Betätigung eines ersten Schaltmittels (18) mit einer ersten Drehgeschwindigkeit und bei Betätigung eines zweiten Schaltmittels (26) mit einer zweiten Drehgeschwindigkeit antreibbar ist, **dadurch gekennzeichnet, dass** das zweite Schaltmittel (26) durch eine Taste (27) schaltbar ist, bei dessen Betätigung das Element (7) mit der zweiten, einer gegenüber der ersten Drehgeschwindigkeit höheren Drehgeschwindigkeit angetrieben ist.

2. Fruchtpresse nach Anspruch 1, **dadurch gekennzeichnet, dass** der Elektromotor (2) mit der zweiten Drehgeschwindigkeit nur dann antreibbar ist, wenn das erste Schaltmittel (18) und das zweite Schaltmittel (26) eingeschaltet sind.

3. Fruchtpresse nach Anspruch 1, **dadurch gekennzeichnet, dass** der Elektromotor (2) alternativ bei Betätigung des ersten Schaltmittels (18) mit der ersten Drehgeschwindigkeit oder bei Betätigung des zweiten Schaltmittels (26) mit der zweiten Drehgeschwindigkeit antreibbar ist.

4. Fruchtpresse nach einem der Ansprüche 1 bis 3, **dadurch gekennzeichnet, dass** die Taste (27) auf einer Mantelwand (28) der Fruchtpresse (1) angeordnet ist.

5. Fruchtpresse nach einem der Ansprüche 1 bis 4, **dadurch gekennzeichnet, dass** das erste Schaltmittel (18) durch eine axiale Bewegung des Elements (7) aufgrund einer auf das Element (7) ausgeübten Kraft schaltbar ist.

6. Fruchtpresse nach einem der Ansprüche 1 bis 5, **dadurch gekennzeichnet, dass** ein Schaltkreis vorgesehen ist, der zur Erhöhung der Drehgeschwindigkeit des Elements (7) auf die zweite Drehgeschwindigkeit dem Elektromotor (2) einen gegenüber dem Strom für die erste Drehgeschwindigkeit höheren Strom zuführt.

7. Fruchtpresse nach Anspruch 6, **dadurch gekennzeichnet, dass** der Schaltkreis einen Mikrocontroller (20) aufweist.

8. Fruchtpresse nach Anspruch 7, **dadurch gekennzeichnet, dass** der Mikrocontroller (20) über eine Steuerleitung mit einem Triac (22) verbunden ist, über den der Elektromotor (2) ansteuerbar ist.

9. Fruchtpresse nach einem der Ansprüche 1 bis 8, **dadurch gekennzeichnet, dass** der Elektromotor (2) ein Gleichstrommotor ist.

10. Fruchtpresse nach Anspruch 9, **dadurch gekennzeichnet, dass** dem Gleichstrommotor eine Gleichrichterbrückenschaltung (23) vorgeschaltet ist.

## Claims

1. Fruit press (1) with a centrally arranged, outwardly projecting and upwardly tapering element (7) for squeezing out a fruit, the element being drivable by an electric motor (2) at a first rotational speed on actuation of a first switching means (18) and at a second rotational speed on actuation of a second switching means (26), **characterised in that** the second switching means (26) is switchable by a button (27), on the actuation of which the element (7) is drivable at the second rotational speed, which is a rotational speed higher relative to the first rotational speed.

2. Fruit press according to claim 1, **characterised in that** the electric motor (2) is drivable at the second rotational speed only when the first switching means (18) and the second switching means (26) are switched on.

3. Fruit press according to claim 1, **characterised in that** the electric motor (2) is alternatively drivable at the first rotational speed on actuation of the first switching means (18) or at the second rotational speed on actuation of the second switching means (26).

4. Fruit press according to one of claims 1 to 3, **characterised in that** the button (27) is arranged on a circumferential wall (28) of the fruit press (1).

5. Fruit press according to one of claims 1 to 4, **characterised in that** the first switching means (18) is switchable by an axial movement of the element (7) by way of a force exerted on the element (7).

6. Fruit press according to one of claims 1 to 5, **characterised in that** a circuit is provided which, for increasing the rotational speed of the element (7) to the second rotational speed, feeds to the electric motor (2) a current higher relative to the current for the first rotational speed.

7. Fruit press according to claim 6, **characterised in that** the circuit comprises a microcontroller (20).

8. Fruit press according to claim 7, **characterised in that** the microcontroller (20) is connected by way of a control line with a triac (22), by way of which the electric motor (2) is controllable in drive.

9. Fruit press according to one of claims 1 to 8, **characterised in that** the electric motor (2) is a direct current motor.

10. Fruit press according to claim 9, **characterised in that** a rectifier bridge circuit (23) is connected upstream of the direct current motor.

## Revendications

1. Presse-fruits (1) comprenant un élément (7) disposé de manière centrale, en saillie et se rétrécissant vers le haut, destiné à presser un fruit, qui peut être entraîné par un moteur électrique (2) lorsqu'un premier moyen de commutation (18) est activé avec une première vitesse de rotation et lorsqu'un deuxième moyen de commutation (26) est activé avec une deuxième vitesse de rotation, **caractérisé en ce que** le deuxième moyen de commutation (26) est commutable au moyen d'une touche (27), l'élément (7), lors de l'activation du deuxième moyen de commutation, étant entraîné avec la deuxième vitesse de rotation plus élevée par rapport à la première vitesse de rotation.

2. Presse-fruits selon la revendication 1, **caractérisé en ce que** le moteur électrique (2) est entraînable avec la deuxième vitesse de rotation seulement lorsque le premier moyen de commutation (18) et le deuxième moyen de commutation (26) sont enclenchés.

3. Presse-fruits selon la revendication 1, **caractérisé en ce que** le moteur électrique (2) est alternativement entraînable avec la première vitesse de rotation, lorsque le premier moyen de commutation (18) est activé, ou avec la deuxième vitesse de rotation, lorsque le deuxième moyen de commutation (26) est activé.

4. Presse-fruits selon l'une quelconque des revendications 1 à 3, **caractérisé en ce que** la touche (27) est disposée sur une paroi d'enveloppe (28) du presse-fruits (1).

5. Presse-fruits selon l'une quelconque des revendications 1 à 4, **caractérisé en ce que** le premier moyen de commutation (18) est commutable par un mouvement axial de l'élément (7) en raison d'une force exercée sur l'élément (7).

6. Presse-fruits selon l'une quelconque des revendications 1 à 5, **caractérisé en ce qu'**un circuit de commutation est prévu, qui, pour augmenter la vitesse de rotation de l'élément (7) à la deuxième vitesse de rotation, amène au moteur électrique (2) un courant plus élevé par rapport au courant pour la première vitesse de rotation.

7. Presse-fruits selon la revendication 6, **caractérisé en ce que** le circuit de commutation présente un microcontrôleur (20).

8. Presse-fruits selon la revendication 7, **caractérisé en ce que** le microcontrôleur (20) est raccordé à un triac (22) par l'intermédiaire d'une ligne de commande, par l'intermédiaire duquel triac le moteur électrique (2) peut être commandé.

9. Presse-fruits selon l'une quelconque des revendications 1 à 8, **caractérisé en ce que** le moteur électrique (2) est un moteur à courant continu.

10. Presse-fruits selon la revendication 9, **caractérisé en ce qu'**un circuit de redresseur en pont (23) est commuté en amont du moteur à courant continu.
